(19) Europäisches Patentamt
European Patent Office
Office européen des brevets

(11) **EP 3 456 993 B1**

(12) **EUROPEAN PATENT SPECIFICATION**

(45) Date of publication and mention
of the grant of the patent:
**24.06.2020 Bulletin 2020/26**

(51) Int Cl.:
*F16D 7/02* *(2006.01)*    *F16D 43/21* *(2006.01)*

(21) Application number: **17275141.4**

(22) Date of filing: **14.09.2017**

(54) **TORQUE TRANSMISSION DEVICE**

DREHMOMENTÜBERTRAGUNGSVORRICHTUNG

DISPOSITIF DE TRANSMISSION DE COUPLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.03.2019 Bulletin 2019/12**

(73) Proprietor: **Goodrich Actuation Systems Limited West Midlands B90 4SS (GB)**

(72) Inventors:
• **KRACKE, Jeremy**
**Stone, Staffordshire ST15 8FG (GB)**

• **EGAN, Jason**
**Wolverhampton, West Midlands WV10 6AX (GB)**

(74) Representative: **Dehns**
**St. Bride's House**
**10 Salisbury Square**
**London EC4Y 8JD (GB)**

(56) References cited:
**DE-A1- 4 300 083      US-A- 2 668 426**
**US-A1- 2010 219 038**

## Description

### Technical Field

The present disclosure relates to a torque transmission device (for example a torque limiter or a freewheel) which comprises an earth ring, and particularly to such a torque transmission device for use in high-torque systems. The torque transmission device may be suitable for use in aerospace applications, for example in the transmission between a centralised Power Drive Unit (PDU) and an actuator which moves flaps, slats or other flight control surfaces on an aircraft wing.

### Background

Known torque transmission devices (for example torque limiters and freewheels) may comprise an earth ring operable to earth torque. In such devices, the torque is transmitted to the earth ring via bearings (for example, rollers or sprags) which bear against the earth ring and apply a contact stress to the earth ring surface. The earth ring is typically made of case-hardened steel to deal with the high stresses, and is a sizeable and heavy structure that may comprise between 5% and 11%, for example, of the total weight of the torque transmission device. The earth ring may not be corrosion resistant, and may need to be treated with expensive corrosion-protection treatments.

One system where a torque transmission device (for example a torque limiter) may be implemented is in the secondary flight control system of an aircraft. Such systems typically include a series of actuators, each linked to a flap or slat (or other flight control surface) on the leading or trailing edge of the aircraft wings. The actuators may all be connected to a transmission system that delivers torque down each wing from a centralised Power Drive Unit (PDU). The PDU provides sufficient torque to drive all surfaces of the system. In the event of a failure of one of the actuators (for example, if the actuator jams), then all of the torque provided by the PDU may be diverted to that particular actuator, which may cause damage to the actuator.

To protect the actuators, a torque limiter may be provided on the transmission line going from the PDU to each wing. These torque limiters allow only enough torque for each wing to be transmitted. Then, further torque limiters may be incorporated into the actuator inputs in order to prevent the full torque for that wing from being transmitted into any one actuator.

Particularly in aerospace applications, it is desirable to minimise the weight of components, since unnecessary weight is a source of inefficiency in the operation of the aircraft. Moreover, is it desirable to reduce the cost and complexity of manufacture of torque transmission devices. An improved torque transmission device, and particularly an improved torque limiter, is therefore sought.

US 2668426 discloses a torque limiting clutch including a rotatable driven member having a plurality of axially extending fingers. The driven member is mounted within the fingers so that the latter overlie the periphery of the driven member but are spaced from it. The outer surface of the driven member is serrated or provided with grooves to form a cam-like member, and a series of rollers are mounted between the fingers to bear against the cam-like surface of the driven member.

US 2010/0219038 discloses a freewheel bearing device including an outer element and inner element arranged inside the outer element, and a free wheel provided with at least a wedging element, arranged between the inner element and the outer element to allow a free rotational movement in one direction between the outer element and the inner element and for transmission of a torque in the other direction between the outer element and the inner element.

DE 4300083 discloses an overload clutch including a coupling that has an elastic intermediate element and a drive element that is formed as a hub. The drive element is mounted on a driveshaft via at least one adjusting spring .The driven element takes the form of a circular cylinder and has a gear attached to it via at least one adjusting spring.

### Summary

The present disclosure can be seen to provide a torque transmission device comprising: an input drive shaft; a housing; an earth ring; a bearing cage; and a plurality of bearings held by the bearing cage between an inner surface of the earth ring and an outer surface of the input drive shaft, wherein the earth ring is mounted within the housing such that an outer surface of the earth ring contacts an inner surface of the housing along a contact area, thereby providing a frictional interface at the contact area for transmitting torque from the earth ring to the housing and wherein an output is connected to the bearing cage.

The contact area between the outer surface of the earth ring and the inner surface of the housing may take the shape of the curved surface of a cylinder. Torque may be transmitted from the earth ring to the housing only via the contact area, for example only via the contact area that takes the shape of the curved surface of a cylinder.

Over 50% of the outer surface of the earth ring may be in contact with the inner surface of the housing. Over 60%, 70%, 80% or 90% of the outer surface of the earth ring may be in contact with the inner surface of the housing. The entire outer surface of the earth ring may be in contact with the inner surface of the housing.

The torque transmission device may be arranged such that, in a first operating condition, the output is operable to rotate on rotation of the input drive shaft.

The torque transmission device may be arranged such that, in a second operating condition, torque is prevented from being transmitted from the input drive shaft to the output. That is, a braking load may be applied to the output and/or the input drive shaft. The output and/or the input drive shaft may be prevented from rotating in the second operating condition.

The torque transmission device may be arranged such that, in a second operating condition, the bearings bear against the earth ring to apply torque to the earth ring. The torque transmitted to the earth ring from the bearings may be transmitted from the earth ring to the housing (solely) via the frictional interface at the contact area between the outer surface of the earth ring and the inner surface of the housing.

The earth ring may be configured to bear a contact stress applied by the bearings on the earth ring. In particular, the earth ring may be sufficiently thick to bear the contact stress applied by the bearings on the earth ring.

Any reference herein to the "thickness" (or "thinness") of the earth ring is a reference to its radial thickness (i.e. its extent in the radial direction). Correspondingly, any reference herein to the "thickness" (or "thinness") of the housing is a reference to its radial thickness (i.e. its extent in the radial direction).

The earth ring may be flexible (to a necessary degree) such that the torque transmitted from the earth ring to the housing is reacted by the frictional force between the earth ring and the housing such that the earth ring does not slip within the housing. In particular, the earth ring may be sufficiently thin to be flexible enough that the torque transmitted from the earth ring to the housing is reacted by the frictional force between the earth ring and the housing such that the earth ring does not slip within the housing.

The earth ring may be flexible enough that it can be deformed by the applied contact stress from the bearings so that the frictional force between the earth ring and the housing reacts the contact stress and the earth ring does not slip within the housing. That is, friction between the earth ring and the housing may prevent the earth ring from sliding within the housing when the bearings bear against the earth ring.

The contact stress between the earth ring and the housing may be approximately one tenth, or less, of the contact stress between the bearings and the earth ring.

The earth ring may not be bonded to the housing. Alternatively, the earth ring may be bonded to the housing, for example using an organic adhesive.

The earth ring may be less than 5mm thick, and optionally less than 4mm thick. These values may be particularly suitable for a torque transmission device designed to receive an input torque of up to 500Nm. This may allow the earth ring to be sufficiently flexible to be deformed by the applied contact stress from the bearings so that the frictional force between the earth ring and the housing reacts the contact stress and the earth ring does not slip within the housing.

The degree of deformation of the earth ring under loading from the bearings depends on: the inner diameter of the earth ring; the number of bearings; the radius of the bearings; the magnitude of the frictional force applied to the inner and outer surfaces of the earth ring; the elastic modulus of the material of the earth ring; and the thickness of the earth ring.

The earth ring may be thicker than the depth at which the peak shear stress (resulting from the contact stress applied by the bearings on the earth ring) occurs. The earth ring may be about 4 to 10 times thicker than the depth below the surface at which the peak shear stresses occur, and optionally is about 5 to 8 times, or 5 to 6 times, thicker than the depth below the surface at which of the peak shear stresses occur.

The depth below the surface at which of the peak shear stresses occur may depend on the material of the bearing and earth ring, on the force applied on the earth ring by the bearing, and on the geometry of the bearing and the earth ring.

Specifically, the depth of the peak shear stress may be expressed by the following equation:

$$shear_{peak} := 0.64 \cdot \sqrt{\frac{Load_{roller}}{L_{roller}} \cdot \frac{D_{ring} \cdot D_{roller}}{\left(D_{ring} - D_{roller}\right)} \cdot \left(\frac{1 - \nu_{ring}^2}{E_{ring}} + \frac{1 - \nu_{roller}^2}{E_{roller}}\right)}$$

where:

$Load_{roller}$ is the load applied by a roller;
$L_{roller}$ is the length of the roller;
$D_{ring}$ is the inner diameter of the earth ring;
$D_{roller}$ is the diameter of the roller;

$v_{ring}$ is the Poisson's ratio of the material of the earth ring;
$v_{roller}$ is the Poisson's ratio of the material of the roller;
$E_{ring}$ is the Young's modulus of the material of the earth ring; and
$E_{roller}$ is the Young's modulus of the material of the roller;

The peak shear stresses may occur at a depth of about 0.25mm to 0.5mm below the surface.

The earth ring may be about 1mm to 4mm thick, for example 1.5mm to 2.5mm thick, and optionally is approximately 1.5mm thick.

The earth ring may have an inner diameter of 50mm to 100mm, and optionally has an inner diameter of approximately 70mm.

The earth ring may have a very hard inner surface, i.e. a surface that can withstand the contact stresses applied by the bearings. The earth ring inner surface may have a hardness of greater than 60 HRC. The earth ring inner surface may have a hardness of less than 70 HRC. The earth ring inner surface may have a hardness of 62 to 64 HRC, for example. The earth ring may comprise case-hardened metal (for example, steel) or a ceramic.

If the earth ring comprises case-hardened metal, the inner surface of the earth ring may be case-hardened. The case-hardened layer may be sufficiently thick that it can withstand the wear and contact stresses applied by the bearings. If the case-hardened layer is too thin, surface failure (brinelling) may occur. The earth ring may comprise a sufficiently thick non-hardened outer layer to impart flexibility to the earth ring. If the earth ring is through-hardened rather than case-hardened (or if the non-hardened layer is too thin), the earth ring may be brittle and may fracture.

The earth ring may be case-hardened to a depth of 2 to 5 times the depth at which the peak shear stresses occur in the earth ring.

The earth ring may be case-hardened to a depth of about 0.5mm to 1mm.

The earth ring may be case-hardened to a depth of 20% to 80%, and optionally, 30% to 70%, and optionally 40% to 60% of the thickness of the earth ring.

The earth ring may be case hardened by carburizing. The earth ring may be case hardened by flame or induction hardening, or by nitriding, cyaniding, carbonitriding, or ferritic nitrocarburising. An appropriate process may be chosen depending on, for example, the carbon content and composition of the metal.

The housing may comprise a lighter material than the earth ring, for example, aluminium, titanium, or a composite comprising carbon filament and resin. The housing may have a sufficient thickness to absorb the maximum hoop stresses that could be imparted by the bearings.

The housing may be about 10mm thick.

The housing may be about 6 to 10 times thicker than the earth ring.

The load applied by the roller ($Load_{roller}$ in the equation above) may be 20kN to 40kN, and optionally is 25kN to 30kN. The length of the roller ($L_{roller}$ in the equation above) may be 10mm to 30mm, for example 12mm or 24mm. The diameter of the roller may be between 10 and 20mm, and optionally is 12mm.

The torque transmission device may be used in a high-torque system, where the input torque is, for example, greater than 15Nm, greater than 50Nm, or greater than 100Nm. The input torque is, for example, less than 1000Nm, or less than 500Nm. The input torque may be, for example, 15Nm to 500Nm. The input torque may be approximately 400Nm, for example. The torque transmission device may be a torque limiter, wherein the first operating condition is a condition in which the input torque applied by the input drive shaft is below a predetermined threshold, and the second operating condition is an overload condition in which the input torque applied by the input drive shaft is above the predetermined threshold.

The input torque applied by the input drive shaft may exceed the predetermined threshold (in the second operating condition, i.e. the overload condition) as a result of a failure or jam in an associated actuator (or in a control surface associated with an actuator), for example.

The torque limiter may be a roller-jammer. In the roller-jammer, the plurality of bearings may be rollers, and the bearing cage may be a roller cage. The output may be connected to the roller cage.

The input drive shaft may have a lobed shape, when viewed in cross-section. The cross-section of the input drive shaft may have an approximately polygonal shape (for example, having between 3 and 8 sides, for example 6 sides), with flattened points. The sides may be straight or may be defined by inwardly-bowed arcs instead. The cross-section of the earth ring may be annular, such that the inner surface of the earth ring is circular in cross-section, and an inner surface of the earth ring defines a cylinder. A pocket for receiving a roller may be defined between each "side" of the outer surface of the input drive shaft and the inner surface of the earth ring. The pocket may be of non-uniform radial clearance, i.e. the radial distance between the outer surface of the input drive shaft and the inner surface of the earth ring may vary circumferentially. There may be the same number of rollers as there are "sides" of the cross-section of the input drive shaft.

The roller-jammer may comprise a torsion bar arranged to hold the roller cage in alignment with the input drive shaft in the first operating condition.

When the roller cage and input drive shaft are held in alignment (in the first operating condition), the roller cage may hold the plurality of rollers in the parts of the pocket of maximum radial clearance (i.e. maximum radial distance between the outer surface of the input drive shaft and the inner surface of the earth ring). That is, the rollers may be held in the central part of the pocket. This may allow the rollers to slide, such that both the input drive shaft and roller cage rotate together, thereby transmitting drive from the input drive shaft to the output (which is connected to the roller cage).

In an overload condition (in the second operating condition), the plurality of rollers may bear against the inner surface of the earth ring and an outer surface of the input drive shaft, and the rotation of the input drive shaft may thereby be resisted. In more detail, in an overload condition, an angular movement of the roller cage relative to the input drive shaft may result in the rollers no longer being held in the centre of the pocket (i.e. at the position of maximum clearance between the outer surface of the input drive shaft and the inner surface of the earth ring). Instead, the rollers may be forced away from the centre of the pocket to bear against both the outer surface of the input drive shaft and the inner surface of the earth ring and become jammed therebetween. As a result, the rotation of the input drive shaft may be resisted.

For a given twist of the torsion bar (i.e. for a given differential angular displacement of the torsion bar), the rollers may be more readily forced away from the centre of the pocket if the sides of the cross-section of the input drive shaft are defined by inwardly-bowed arcs, compared to the case that the sides of the cross-section of the input drive shaft are straight lines.

The torque limiter may be a sprag-type torque limiter. In that case, the plurality of bearings may be sprags (for example, non-revolving asymmetric figure-of-eight shaped bearings), and the bearing cage may be a sprag cage. The cross-section of the input drive shaft may be circular in shape, and the outer surface of the input drive shaft may define an inner race of the sprag-type torque limiter. The cross-section of the earth ring may be annular, such that the inner surface of the earth ring is circular in cross-section, and an inner surface of the earth ring may define an outer race of the sprag-type torque limiter. The output may be connected to the sprag cage. The radially-inner end of each sprag may be contained within a pocket in the outer surface of the input drive shaft, and the radially-outer end of each sprag may be contained within a pocket in the sprag cage.

When not in an overload condition, the sprags may be free to slide between the inner race and outer race, such that both the input drive shaft and sprag cage rotate together, thereby transmitting drive from the input drive shaft to the output (which is connected to the sprag cage).

In an overload condition, the pockets in the outer surface of the input drive shaft may go out of alignment with the pockets in the sprag cage, causing the sprags to tip such that they are no longer free to slide between the inner race and outer race. Instead the sprags may transmit torque from the input drive shaft to the earth ring and as a result any further input torque may be transmitted from the input drive shaft to the earth ring and then to the housing.

The torque transmission device may be a one-way freewheel. In this case, the first operating condition (in which the output rotates on rotation of the input drive shaft) is a condition in which the input drive shaft rotates in a first direction, and the second operating condition (in which torque is prevented from being transmitted from the input drive shaft to the output) is a condition in which the input drive shaft rotates in the opposite direction.

The freewheel may be a sprag clutch. Such a sprag clutch may have a structure similar to that described above in relation to the sprag-type torque limiter, except that the sprags are arranged to tip when the input drive shaft rotates in the opposite direction (rather than when the input torque exceeds a predetermined threshold, as in the case of a sprag-type torque limiter).

The sprags may be arranged such that when the input drive shaft rotates in a first direction the sprags are free to slide between the inner race and outer race, such that both the input drive shaft and sprag cage rotate together, thereby transmitting drive from the input drive shaft to the output (which is connected to the sprag cage).

The sprags may be arranged such that when the input drive shaft rotates in the opposite direction, the sprags tip such that they are no longer free to slide between the inner race and outer race. Instead the sprags may transmit torque from the input drive shaft to the earth ring and as a result any further input torque may be transmitted from the input drive shaft to the earth ring and then to the housing.

## Brief Description of Drawings

Non-limiting examples will now be described, with reference to the accompanying drawings, in which:

Figure 1A shows a cross-section of a prior art roller-jammer;
Figure 1B shows a perspective view of the housing of the prior art roller-jammer of Figure 1A;
Figure 1C shows a perspective view of the earth ring of the prior art roller-jammer of Figure 1A;
Figure 2A shows a cross-section of an exemplary roller-jammer according to the present disclosure;
Figure 2B shows a perspective view of the housing of the exemplary roller-jammer of Figure 2A;

Figure 2C shows a perspective view of the earth ring of the exemplary roller-jammer of Figure 2A;

Figure 3 shows a cross-section of an exemplary sprag-type torque limiter or sprag clutch; and

Figure 4 shows a schematic of an aircraft flight control surface actuation system, comprising the exemplary roller-jammer of Figure 2.

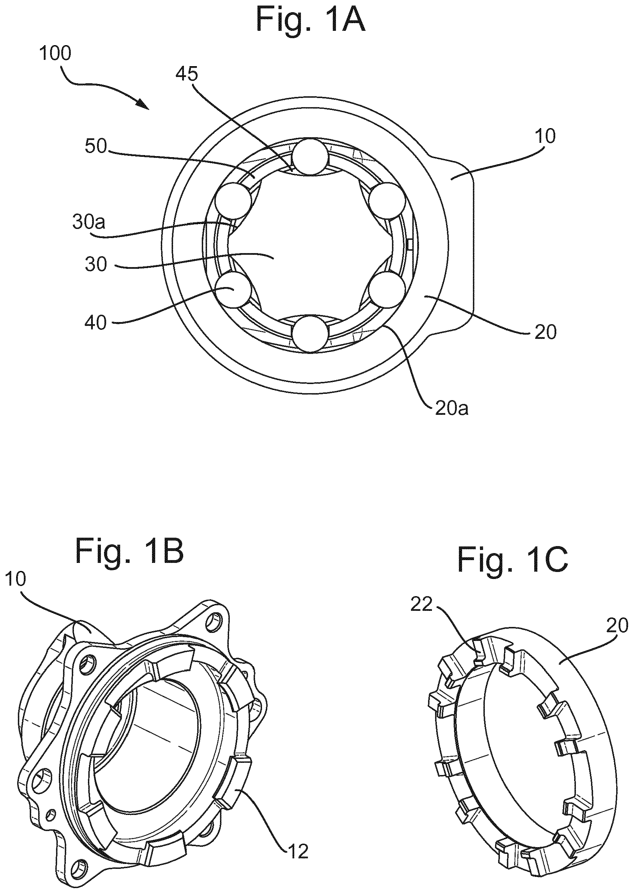

Figure 1A shows a cross-sectional view of a prior art roller-jammer 100. The roller-jammer 100 is provided in a mechanical system in which torque is transmitted by an input drive shaft 30. The input drive shaft 30 is supported for rotation within a housing 10 (shown also in Figure 1B). Mounted adjacent the housing is an earth ring 20 (shown also in Figure 1C). Torque is transmitted from the earth ring 20 to the housing 10 via dogs 22 on the earth ring that interlock with corresponding dogs 12 on the housing. The housing 10 comprises aluminium and the earth ring 20 comprises steel that has been case-hardened by carburisation.

The case-hardened steel earth ring 20 is not corrosion resistant, and since it is mounted adjacent to a non-ferrous housing 10 and is not protected from the surrounding environment, expensive corrosion-protection treatments are required. The case-hardened steel earth ring 20 comprises between 5% and 11% of the total weight of the roller-jammer unit. That is, the earth ring 20 is a comparatively heavy component.

A roller cage 50 is coaxial with and encircles a length of the input drive shaft 30 within the housing 10. The roller cage 50 is connected to the input drive shaft 30 by a torsion bar (not shown).

The roller cage 50 positions a plurality of rollers 40 in pockets 45 defined between the outer surface 30a of the input drive shaft 30 and the inner surface 20a of the earth ring 20. The outer surface 30a of the input drive shaft 30 has a lobed shape, when viewed in cross-section (as seen in Figure 1A). In the present example, the outer surface 30a of the input drive shaft 30 has an approximately hexagonal shape, with flattened points and inwardly-bowed arcs instead of straight sides. The inner surface 20a of the earth ring 20 is a circle, when viewed in cross-section (as seen in Figure 1A). A pocket 45 for receiving a roller 40 is defined between each "side" of the outer surface 30a of the input drive shaft 30 and the inner surface 20a of the earth ring 20. As will be clear from the foregoing and from Figure 1A, the pocket is thus of non-uniform radial clearance, i.e. the radial distance between the outer surface 30a of the input drive shaft 30 and the inner surface 20a of the earth ring 20 varies circumferentially.

When the input torque is below a predetermined threshold, the roller cage 50 is held in alignment with the input drive shaft 30 by a torsion bar, and in such a condition the roller cage 50 holds the plurality of rollers 40 in the parts of the pocket 45 of maximum radial clearance (i.e. maximum radial distance between the outer surface 30a of the input drive shaft 30 and the inner surface 20a of the earth ring 20). That is, the rollers 40 are held in the central part of the pocket 45. This allows the rollers 40 to slide, and both the input drive shaft 30 and roller cage 50 rotate together.

In the event that the applied torque exceeds the predetermined threshold, for example as a result of a failure or jam in an associated actuator or control surface, the angular movement of the roller cage 50 relative to the input drive shaft 30 results in the rollers 40 no longer being held in the centre of the pocket 45 (i.e. at the position of maximum clearance between the outer surface 30a of the input drive shaft 30 and the inner surface 20a of the earth ring 20. Instead, the rollers 40 are forced away from the centre of the pocket 45 to bear against both the outer surface 30a of the input drive shaft 30 and the inner surface 20a of the earth ring 20 and become jammed therebetween. As a result, the rotation of the input drive shaft 30 is resisted.

In such a case, huge contact stresses occur between the rollers 40 and earth ring 20. Additionally, significant hoop stresses are imparted to the roller-jammer. In this prior art example, the earth ring 20 bears the contact pressures and hoop stresses. Moreover, the earth ring dogs 22 must be of a sufficient size and strength to transmit the torque to the housing 10 via the housing dogs 12. As a result, the earth ring 20 must be thick (typically around 10mm thick for a torque limiter designed to receive an input torque of approximately 400 Nm). Since the earth ring is so thick, the housing need only be relatively thin (typically around 4mm thick for a torque limiter designed to receive an input torque of approximately 400 Nm). In the present example, the earth ring 20 is approximately two to three times thicker than the housing 10.

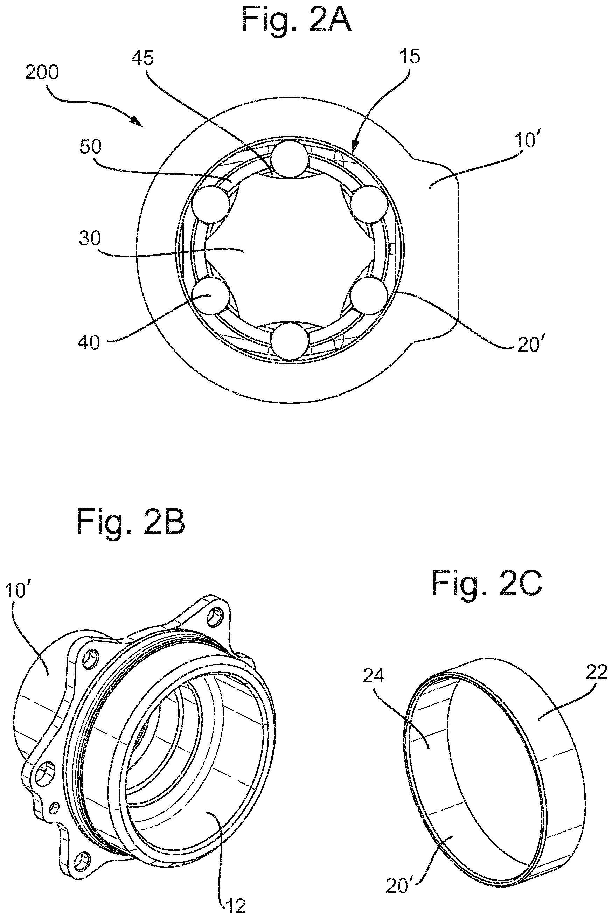

Figure 2A shows a cross section of a roller-jammer 200 in accordance with the present disclosure. The roller-jammer 200 comprises: an input drive shaft 30, a housing 10, an earth ring 20', a roller cage 50, and a plurality of rollers 40 held by the roller cage 50 in pockets 45 between an inner surface 24 of the earth ring 20' and an outer surface of the input drive shaft 30. The earth ring 20' is mounted within the housing 10' such that an outer surface 22 of the earth ring 20' contacts an inner surface 12 of the housing 10 along a contact area 15, thereby providing a frictional interface at the contact area 15 for transmitting torque from the earth ring 20' to the housing 10'.

The input drive shaft 30, roller cage 50, rollers 40 and pockets 45 are unchanged compared to Figure 1A. However, the housing 10 and earth ring 20 have been replaced by a new housing 10' and new earth ring 20' (shown respectively in Figure 2B and Figure 2C). The new earth ring 20' is thinner than the prior art earth ring 20, and so the roller-jammer unit is lighter (by about 4%). The new earth ring 20' is mounted within the housing 10', rather than adjacent thereto, and as a result, the earth ring 20' need not be treated using corrosion-prevention treatments because the interface between the earth ring 20' and housing 10' at contact area 15 is protected from the environment.

The thickness of the earth ring 20' is at least 4 times the depth at which the peak shear stresses occur. The depth at which the peak shear stresses occur is determined according to the equation below and is based on the expected load applied by a roller (Load$_{roller}$), the length of the rollers (L$_{roller}$), the inner diameter of the earth ring (D$_{ring}$), the diameter of the rollers (D$_{roller}$), the Poisson's ratio of the material of the earth ring (v$_{ring}$), the Poisson's ratio of the material of the rollers (v$_{roller}$), the Young's modulus of the material of the earth ring (E$_{ring}$), and the Young's modulus of the material of the rollers (E$_{roller}$).

$$shear_{peak} := 0.64 \cdot \sqrt{\frac{Load_{roller}}{L_{roller}} \cdot \frac{D_{ring} \cdot D_{roller}}{(D_{ring} - D_{roller})} \left( \frac{1 - v_{ring}^2}{E_{ring}} + \frac{1 - v_{roller}^2}{E_{roller}} \right)}$$

Two examples are shown in the table below.

|  | Example 1 | Example 2 |
|---|---|---|
| Material of earth ring | Carburised steel | Steel |
| Material of bearing | Steel | Steel |
| Load roller | 26.7kN | 30.2kN |
| L$_{roller}$ | 24mm | 12mm |
| D$_{ring}$ | 70mm | 70mm |
| Droller | 12mm | 12mm |
| v$_{ring}$ | 0.3 | 0.3 |
| v$_{roller}$ | 0.3 | 0.3 |
| E$_{ring}$ | 1.76x10$^5$ MPa | 2.1x10$^5$ MPa |
| E$_{roller}$ | 2.1x10$^5$ MPa | 2.1x10$^5$ MPa |
| **Peak shear stress depth** | **0.25mm** | **0.36mm** |
| **Minimum earth ring thickness** | **1.0mm** | **1.44mm** |

In this example, the earth ring 20' is 1.5mm thick and has an inner diameter of 70mm.

The new housing 10' is thicker than the prior art housing 10. The new housing 10' is 9mm thick in this example.

As in the prior art roller-jammer, the housing 10' comprises aluminium and the earth ring 20' comprises steel which has been case-hardened by carburisation, in this example. The rollers comprise steel.

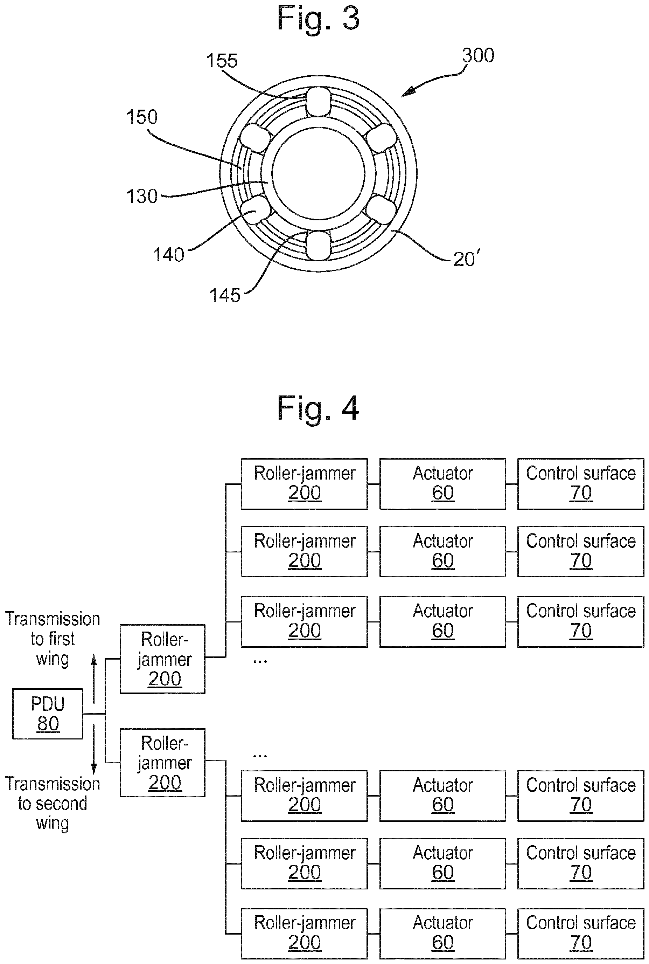

The output may provide drive to an actuator 60. For example, the output provides drive to an actuator 60 (shown in Figure 4) operable to move a flap, slat or other flight control surface 70 (shown in Figure 4) on an aircraft wing (not shown). The housing 10' is attached to the aircraft structure such that in an overload condition, torque is transmitted from the earth ring 20', to the housing 10' and to the airframe. This prevents the overload torque from being transmitted downstream of the torque limiter 200 to the actuator 60, and thus protects the actuator 60 from the overload torque.

Figure 3 shows a cross-section of a sprag-type torque limiter 300. The structure is similar to that of the roller-jammer 200 shown in Figure 2, and the earth ring 20' and housing (not shown) are essentially identical. However, in place of rollers 40, the sprag-type torque limiter 300 comprises sprags 140, and in place of a roller cage 50, the sprag-type torque limiter 300 comprises a sprag cage 150 (to which the output is connected) which holds the sprags 140 in pockets 155. Additionally, the input drive shaft 130 of sprag-type torque limiter 300 differs from that of the input drive shaft 30 of the roller-jammer 200, in that the sprag-type torque limiter 300 input drive shaft 130 has a circular cross-section with pockets 145 rather than a lobed cross-section. The radially-inner end of each sprag 140 is contained within the pockets 145 in the outer surface of the input drive shaft 130, and the radially-outer end of each sprag 140 is contained within the pockets 155 in the sprag cage 150.

The outer surface of the input drive shaft 130 defines an inner race of the sprag-type torque limiter and the inner surface of the earth ring 20' defines an outer race of the sprag-type torque limiter.

When not in an overload condition, the sprags 140 are free to slide between the inner race and outer race, such that both the input drive shaft 130 and sprag cage 150 rotate together, thereby transmitting drive from the input drive shaft 130 to the output (which is connected to the sprag cage).

In an overload condition, the pockets 145 in the outer surface of the input drive shaft 130 go out of alignment with the pockets 155 in the sprag cage 150, causing the sprags 140 to tip such that they are no longer free to slide between the inner race and outer race. Instead the sprags 140 transmit torque from the input drive shaft 130 to the earth ring 20' and as a result any further input torque may be transmitted from the input drive shaft 130 to the earth ring 10' and then to the housing.

A sprag clutch has a similar structure to that of the sprag-type torque limiter described above. However, in the sprag clutch, the sprags 140 are arranged such that when the input drive shaft 130 rotates in a first direction the sprags 140 are free to slide between the inner race and outer race, such that both the input drive shaft 130 and sprag cage 150 rotate together, thereby transmitting drive from the input drive shaft 130 to the output (which is connected to the sprag cage 150). When the input drive shaft 130 rotates in the opposite direction, the sprags 140 tip such that they are no longer free to slide between the inner race and outer race. Instead the sprags 140 transmit torque from the input drive shaft 130 to the earth ring 20' and as a result any further input torque may be transmitted from the input drive shaft 130 to the earth ring 20' and then to the housing.

Figure 4 shows a part of a secondary flight control system of an aircraft, including a series of actuators 60 each linked to a flap or slat or other flight control surface 70 on the leading or trailing edge of the aircraft wings (not shown). The actuators are connected to a transmission system that delivers torque down each wing from a centralised Power Drive Unit (PDU) 80. The PDU 80 provides sufficient torque to drive all surfaces of the system. To protect the actuators 60, a torque limiter (which in this case is a roller-jammer 200, but could instead be a sprag-type torque limiter) is provided on the transmission line going from the PDU 80 to each wing. These torque limiters 200 only allow enough torque for each wing to be transmitted. Then, further torque limiter devices 200 are incorporated into the actuator 60 inputs in order to prevent full torque from being transmitted into any one actuator 60.

## Claims

1. A torque transmission device (200;300) comprising:

   an input drive shaft (30;130);
   a housing (10');
   an earth ring (20');
   a bearing cage (50; 150); and
   a plurality of bearings (40;140); held by the bearing cage between an inner surface of the earth ring (20'), and an outer surface of the input drive shaft (30; 130);
   wherein the earth ring is mounted within the housing (10') such that an outer surface of the earth ring (20') contacts an inner surface of the housing (10') along a contact area, thereby providing a frictional interface at the contact area for transmitting torque from the earth ring (20') to the housing (10') and wherein an output is connected to the bearing cage.

2. A torque transmission device according to claim 1, wherein the contact area takes the shape of a curved surface of a cylinder,
   and/or wherein torque is transmitted from the earth ring (20') to the housing (10') only via the contact area.

3. A torque transmission device according to claim 1 or 2, wherein the torque transmission device is arranged such that, in a first operating condition, the output is operable to rotate on rotation of the input drive shaft (30),
   and/or the torque transmission device is arranged such that, in a second operating condition, torque is prevented from being transmitted from the input drive shaft (30) to the output.

4. A torque transmission device according to claim 3, wherein the torque transmission device is a torque limiter, wherein the first operating condition is a condition in which the input torque applied by the input drive shaft is below a predetermined threshold and the second operating condition is an overload condition in which the input torque applied by the input drive shaft is above the predetermined threshold, and optionally the torque limiter may be a roller-jammer or a sprag-type torque limiter.

5. A torque transmission device according to claim 3, wherein the torque transmission device is a one-way freewheel, wherein the first operating is a condition in which the input drive shaft rotates in a first direction, and the second operating condition is a condition in which the input drive shaft rotates in an opposite direction, and optionally the one-way freewheel may be a sprag clutch.

6. A torque transmission device according to claim 3, 4 or 5, wherein the torque transmission device is arranged such that, in the second operating condition, the bearings (40;140) bear against the earth ring (20') to apply torque to the earth ring.

7. A torque transmission device according to claim 6, wherein the earth ring is configured to bear a contact stress applied by the bearings on the earth ring.

8. A torque transmission device according to claim 7, wherein the earth ring is sufficiently thick to bear the contact stress applied by the bearings on the earth ring.

9. A torque transmission device according to any preceding claim, wherein the earth ring is flexible such that the torque transmitted from the earth ring to the housing is reacted by the frictional force between the earth ring and the housing such that the earth ring does not slip within the housing.

10. A torque transmission device according to claim 9, wherein the earth ring is sufficiently thin to be flexible enough that the torque transmitted from the earth ring to the housing is reacted by the frictional force between the earth ring and the housing such that the earth ring does not slip within the housing.

11. A torque transmission device according to any preceding claim, wherein the earth ring is 1 to 5mm thick, or optionally is 1mm to 3mm thick, or optionally is 1.5mm to 2.5mm thick, or optionally is 1.5mm thick, and/or wherein the earth ring is thicker than the depth at which a peak shear stress occurs, and optionally is 4 to 10 times thicker than the depth below the surface at which the peak shear stress occurs, and optionally is about 5 to 8 times, or 5 to 6 times, thicker than the depth below the surface at which of the peak shear stress occurs.

12. A torque transmission device according to any preceding claim, wherein the earth ring comprises case-hardened metal and optionally:

   the earth ring is case-hardened to a depth of 2 to 5 times the depth at which the peak contact stresses occur in the earth ring,
   and/or the earth ring is case-hardened to a depth of about 0.5mm to 1mm,
   and/or the earth ring is case-hardened to a depth of 40% to 60% of the thickness of the earth ring.

13. A torque transmission device according to any preceding claim, wherein the housing (10') comprises a lighter material than the earth ring, and optionally comprises aluminium, titanium, or a composite comprising carbon filament and resin,
   and/or wherein the housing is 6 to 10 times thicker than the thickness of earth ring, and optionally is about 10mm thick.

14. A secondary flight system for an aircraft comprising:

   a centralised power drive unit (80);
   a plurality of actuators (60);
   a transmission arranged to transmit torque from the centralised power drive unit to the plurality of actuators; and
   a torque transmission device (200;300) as claimed in any preceding claim, wherein the torque transmission device is a torque limiter arranged to limit the torque transmitted from the centralised power drive unit to the plurality of actuators.

**Patentansprüche**

1. Drehmomentübertragungsvorrichtung (200; 300), umfassend:

   eine Antriebswelle (30; 130);
   ein Gehäuse (10');
   einen Massenring (20');
   einen Lagerkäfig (50; 150); und
   eine Vielzahl von Lagern (40; 140), die von dem Lagerkäfig zwischen einer Innenfläche des Massenrings (20') und einer Außenfläche der Antriebswelle (30; 130) gehalten wird;
   wobei der Massenring innerhalb des Gehäuses (10') derart angebracht ist, dass eine Außenfläche des Massenrings (20') eine Innenfläche des Gehäuses (10') entlang eines Kontaktbereichs berührt, wodurch an dem Kontaktbereich eine kraftschlüssige Verbindung zum Übertragen eines Drehmoments von dem Massenring (20') an das Gehäuse (10') bereitgestellt wird und wobei ein Abtrieb mit dem Lagerkäfig verbunden ist.

2.  Drehmomentübertragungsvorrichtung nach Anspruch 1, wobei die Kontaktfläche die Form einer gekrümmten Oberfläche eines Zylinders annimmt,
    und/oder wobei ein Drehmoment von dem Massenring (20') an das Gehäuse (10') nur über den Kontaktbereich übertragen wird.

3.  Drehmomentübertragungsvorrichtung nach Anspruch 1 oder 2, wobei die Drehmomentübertragungsvorrichtung dazu ausgelegt ist, dass der Abtrieb in einem ersten Betriebszustand so betrieben werden kann, dass er sich bei Drehung der Antriebswelle (30) dreht,
    und/oder wobei die Drehmomentübertragungsvorrichtung dazu ausgelegt ist, dass in einem zweiten Betriebszustand verhindert wird, dass ein Drehmoment von der Antriebswelle (30) an den Abtrieb übertragen wird.

4.  Drehmomentübertragungsvorrichtung nach Anspruch 3, wobei die Drehmomentübertragungsvorrichtung ein Drehmomentbegrenzer ist, wobei der erste Betriebszustand ein Zustand ist, in dem das Antriebsdrehmoment, das von der Antriebswelle aufgebracht wird, unter einem vorbestimmten Schwellenwert liegt, und wobei der zweite Betriebszustand ein Überlastzustand ist, in dem das Antriebsdrehmoment, das von der Antriebswelle aufgebracht wird, über dem vorbestimmten Schwellenwert liegt, und wobei optional der Drehmomentbegrenzer eine Rollen-Blockiereinrichtung oder ein Klemmkörperdrehmomentbegrenzer ist.

5.  Drehmomentübertragungsvorrichtung nach Anspruch 3, wobei die Drehmomentübertragungsvorrichtung ein Einwege-Freilauf ist, wobei der erste Betriebszustand ein Zustand ist, in dem sich die Antriebswelle in einer ersten Richtung dreht, und der zweite Betriebszustand ein Zustand ist, in dem sich die Antriebswelle in einer entgegengesetzten Richtung dreht, und wobei optional der Einwege-Freilauf eine Klemmkörperkupplung sein kann.

6.  Drehmomentübertragungsvorrichtung nach Anspruch 3, 4 oder 5, wobei die Drehmomentübertragungsvorrichtung dazu ausgelegt ist, dass die Lager (40; 140) in dem zweiten Betriebszustand an dem Massenring (20') anliegen, um ein Drehmoment auf den Massenring aufzubringen.

7.  Drehmomentübertragungsvorrichtung nach Anspruch 6, wobei der Massenring dazu konfiguriert ist, eine Flächenpressung, die von den Lagern auf den Massenring aufgebracht wird, aufzunehmen.

8.  Drehmomentübertragungsvorrichtung nach Anspruch 7, wobei der Massenring ausreichend dick ist, um die Flächenpressung, die von den Lagern auf den Massenring aufgebracht wird, aufzunehmen.

9.  Drehmomentübertragungsvorrichtung nach einem der vorstehenden Ansprüche, wobei der Massenring flexibel ist, so dass dem Drehmoment, das von dem Massenring auf das Gehäuse übertragen wird, durch die Reibungskraft zwischen dem Massenring und dem Gehäuse entgegengewirkt wird, so dass sich der Massenring nicht innerhalb des Gehäuses verschiebt.

10. Drehmomentübertragungsvorrichtung nach Anspruch 9, wobei der Massenring ausreichend dünn ist, um flexibel genug zu sein, dass dem Drehmoment, das von dem Massenring auf das Gehäuse übertragen wird, durch die Reibungskraft zwischen dem Massenring und dem Gehäuse entgegengewirkt wird, so dass sich der Massenring nicht innerhalb des Gehäuses verschiebt.

11. Drehmomentübertragungsvorrichtung nach einem der vorstehenden Ansprüche, wobei der Massenring 1 bis 5 mm dick ist oder optional 1 mm bis 3 mm dick ist oder optional 1,5 mm bis 2,5 mm dick ist oder optional 1,5 mm dick ist, und/oder wobei der Massenring dicker als die Tiefe ist, in der eine Spitzenscherspannung auftritt, und optional 4- bis 10-mal dicker ist als die Tiefe unter der Oberfläche, an der die Spitzenscherspannung auftritt, und optional etwa 5- bis 8-mal oder 5- bis 6-mal dicker ist als die Tiefe unter der Oberfläche, an der die Spitzenscherspannung auftritt.

12. Drehmomentübertragungsvorrichtung nach einem der vorstehenden Ansprüche, wobei der Massenring einsatzgehärtetes Metall umfasst und optional:

    der Massenring bis zu einer Tiefe von 2- bis 5-mal die Tiefe, an der die Spitzenflächenpressungen in dem Massenring auftreten, einsatzgehärtet ist,

und/oder der Massenring bis zu einer Tiefe von etwa 0,5 mm bis 1 mm einsatzgehärtet ist,
und/oder der Massenring bis zu einer Tiefe von 40 % bis 60 % der Dicke des Massenrings einsatzgehärtet ist.

13. Drehmomentübertragungsvorrichtung nach einem der vorstehenden Ansprüche, wobei das Gehäuse (10') ein leichteres Material umfasst als der Massenring und optional Aluminium, Titan oder einen Verbundstoff, der Kohlenstofffaden und Harz umfasst, umfasst,
und/oder wobei das Gehäuse 6- bis 10-mal dicker als die Dicke des Massenrings ist und optional etwa 10 mm dick ist.

14. Sekundäres Flugsystem für ein Luftfahrzeug, umfassend:

   eine zentralisierte Kraftantriebseinheit (80);
   eine Vielzahl von Aktoren (60);
   ein Getriebe, das so ausgelegt ist, dass es ein Drehmoment von der zentralisierten Kraftantriebseinheit an eine Vielzahl von Aktoren überträgt; und
   eine Drehmomentübertragungsvorrichtung (200; 300) nach einem der vorstehenden Ansprüche, wobei die Drehmomentübertragungsvorrichtung ein Drehmomentbegrenzer ist, der so ausgelegt ist, dass er das Drehmoment, das von der zentralisierten Kraftantriebseinheit an die Vielzahl von Aktoren übertragen wird, begrenzt.

## Revendications

1. Dispositif de transmission de couple (200 ; 300) comprenant :

   un arbre d'entraînement d'entrée (30 ; 130) ;
   un boîtier (10') ;
   un anneau de mise à la terre (20') ;
   une cage de palier (50 ; 150) ; et
   une pluralité de paliers (40 ; 140) ; maintenue par la cage de palier entre une surface interne de l'anneau de mise à la terre (20') et une surface externe de l'arbre d'entraînement d'entrée (30 ; 130) ;
   dans lequel l'anneau de mise à la terre est monté à l'intérieur du boîtier (10') de sorte qu'une surface externe de l'anneau de mise à la terre (20') entre en contact avec une surface interne du boîtier (10') le long d'une zone de contact, fournissant ainsi une interface de frottement au niveau de la zone de contact pour transmettre un couple de l'anneau de mise à la terre (20') au boîtier (10') et dans lequel une sortie est reliée à la cage de palier.

2. Dispositif de transmission de couple selon la revendication 1, dans lequel la zone de contact a la forme d'une surface incurvée d'un cylindre,
   et/ou dans lequel le couple est transmis de l'anneau de mise à la terre (20') au boîtier (10') uniquement par l'intermédiaire de la zone de contact.

3. Dispositif de transmission de couple selon la revendication 1 ou 2, dans lequel le dispositif de transmission de couple est agencé de sorte que, dans une première condition de fonctionnement, la sortie peut fonctionner pour tourner lors de la rotation de l'arbre d'entraînement d'entrée (30),
   et/ou le dispositif de transmission de couple est agencé de sorte que, dans une seconde condition de fonctionnement, le couple n'est pas transmis de l'arbre d'entraînement d'entrée (30) à la sortie.

4. Dispositif de transmission de couple selon la revendication 3, dans lequel le dispositif de transmission de couple est un limiteur de couple, dans lequel la première condition de fonctionnement est une condition dans laquelle le couple d'entrée appliqué par l'arbre d'entraînement d'entrée est inférieur à un seuil prédéterminé et la seconde condition de fonctionnement est une condition de surcharge dans laquelle le couple d'entrée appliqué par l'arbre d'entraînement d'entrée est supérieur au seuil prédéterminé, et éventuellement le limiteur de couple peut être un brouilleur à rouleaux ou un limiteur de couple de type à clabots.

5. Dispositif de transmission de couple selon la revendication 3, dans lequel le dispositif de transmission de couple est une roue libre unidirectionnelle, dans lequel le premier fonctionnement est une condition dans laquelle l'arbre d'entraînement d'entrée tourne dans une première direction, et la seconde condition de fonctionnement est une condition dans laquelle l'arbre d'entraînement d'entrée tourne dans une direction opposée, et éventuellement la roue libre unidirectionnelle peut être un embrayage à clabots.

**6.** Dispositif de transmission de couple selon la revendication 3, 4 ou 5, dans lequel le dispositif de transmission de couple est agencé de sorte que, dans la seconde condition de fonctionnement, les paliers (40 ; 140) s'appuient contre l'anneau de mise à la terre (20') pour appliquer un couple à l'anneau de mise à la terre.

**7.** Dispositif de transmission de couple selon la revendication 6, dans lequel l'anneau de mise à la terre est configuré pour supporter une contrainte de contact appliquée par les paliers sur l'anneau de mise à la terre.

**8.** Dispositif de transmission de couple selon la revendication 7, dans lequel l'anneau de mise à la terre est suffisamment épais pour supporter la contrainte de contact appliquée par les paliers sur l'anneau de mise à la terre.

**9.** Dispositif de transmission de couple selon une quelconque revendication précédente, dans lequel l'anneau de mise à la terre est flexible de sorte que le couple transmis de l'anneau de mise à la terre au boîtier est mis à réagir par la force de frottement entre l'anneau de mise à la terre et le boîtier de sorte que l'anneau de mise à la terre ne glisse pas à l'intérieur du boîtier.

**10.** Dispositif de transmission de couple selon la revendication 9, dans lequel l'anneau de mise à la terre est suffisamment mince pour être suffisamment flexible pour que le couple transmis de l'anneau de mise à la terre au boîtier soit mis à réagir par la force de frottement entre l'anneau de mise à la terre et le boîtier de sorte que l'anneau de mise à la terre ne glisse pas à l'intérieur du boîtier.

**11.** Dispositif de transmission de couple selon une quelconque revendication précédente, dans lequel l'anneau de mise à la terre a une épaisseur de 1 à 5 mm, ou éventuellement une épaisseur de 1 mm à 3 mm, ou éventuellement une épaisseur de 1,5 mm à 2,5 mm, ou éventuellement une épaisseur de 1,5 mm, et/ou dans lequel l'anneau de mise à la terre est plus épais que la profondeur à laquelle une contrainte de cisaillement maximale se produit, et est éventuellement 4 à 10 fois plus épais que la profondeur sous la surface à laquelle se produit la contrainte de cisaillement maximale, et est éventuellement environ 5 à 8 fois, ou 5 à 6 fois, plus épais que la profondeur sous la surface à laquelle se produit la contrainte de cisaillement maximale.

**12.** Dispositif de transmission de couple selon une quelconque revendication précédente, dans lequel l'anneau de mise à la terre comprend du métal cémenté et éventuellement :

l'anneau de mise à la terre est cémenté à une profondeur de 2 à 5 fois la profondeur à laquelle les contraintes de contact maximales se produisent dans l'anneau de mise à la terre,
et/ou l'anneau de mise à la terre est cémenté à une profondeur d'environ 0,5 mm à 1 mm,
et/ou l'anneau de mise à la terre est cémenté à une profondeur de 40 % à 60 % de l'épaisseur de l'anneau de mise à la terre.

**13.** Dispositif de transmission de couple selon une quelconque revendication précédente, dans lequel le boîtier (10') comprend un matériau plus léger que l'anneau de mise à la terre et comprend éventuellement de l'aluminium, du titane ou un composite comprenant du filament de carbone et de la résine, et/ou dans lequel le boîtier est 6 à 10 fois plus épais que l'épaisseur de l'anneau de mise à la terre, et a éventuellement une épaisseur d'environ 10 mm.

**14.** Système de vol secondaire pour un aéronef comprenant :

une unité d'entraînement électrique centralisée (80) ;
une pluralité d'actionneurs (60) ;
une transmission agencée pour transmettre le couple de l'unité d'entraînement électrique centralisée à la pluralité d'actionneurs ; et
un dispositif de transmission de couple (200 ; 300) selon une quelconque revendication précédente, dans lequel le dispositif de transmission de couple est un limiteur de couple agencé pour limiter le couple transmis de l'unité d'entraînement électrique centralisée à la pluralité d'actionneurs.

# Fig. 1A

# Fig. 1B

# Fig. 1C

# Fig. 2A

# Fig. 2B

# Fig. 2C

# Fig. 3

# Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2668426 A
- US 20100219038 A
- DE 4300083